# EUROPEAN PATENT SPECIFICATION

(11) **EP 1 977 100 B1**
(45) Date of publication and mention of the grant of the patent: **22.05.2013**
(21) Application number: 07702823.1
(22) Date of filing: 17.01.2007
(51) Int. Cl.: F02P 17/12

(54) **METHOD AND DEVICE EQUIPPED WITH A HIGH-PASS FILTER FOR APPRAISAL THE DETONATION IN EVERY CYLINDER OF AN INTERNAL COMBUSTION ENGINE**
VERFAHREN UND MIT EINEM HOCHPASSFILTER VERSEHENE VORRICHTUNG ZUR BEWERTUNG DER DETONATION IN JEDEM ZYLINDER EINES VERBRENNUNGSMOTORS
PROCEDE ET DISPOSITIF EQUIPE DE FILTRE PASSE-HAUT POUR EVALUER LA DETONATION DANS CHAQUE CYLINDRE D UN MOTEUR A COMBUSTION INTERNE

(30) Priority: 24.01.2006 IT MI20060105; 30.03.2006 IT MI20060598
(43) Date of publication of application: 08.10.2008
(73) Proprietor: Eldor Corporation S.p.A., 22030 Orsenigo (IT)
(72) Inventor: FORTE, Pasquale, 22030 Orsenigo, Como (IT); BORDEGNONI, Stefano, 22030 Orsenigo, Como (IT); GELMETTI, Andrea, 22030 Orsenigo, Como (IT)
(74) Representative: Nemni, Raffaelo
(86) International application number: PCT/EP2007/000369
(87) International publication number: WO 2007/085369

(56) References cited:
- WO-A1-98/51922
- US-A- 5 452 603
- US-A- 5 769 049
- US-A1- 2004 084 020

## Description

### Technical field

The present invention relates to a method and devices therefore for evaluating the detonation inside every cylinder of an internal combustion engine. In particular, a method to evaluate said detonation by means of the measurement of the ionisation current values in each cylinder of an internal combustion engine in a determined interval of time and the calculation of a value on the basis of which the spark will be generated at the spark plug according to the value calculated.

### Background Art

The detonation of the air-combustible mix in the cylinder of an internal combustion engine causes vibrations and can damage the engine if said vibrations are high.

The evaluation of said detonation is likewise one of the elements of fine-tuning of an internal combustion engine.

The devices and methods currently utilised and available on the market to evaluate said detonation are based on the use or piezoelectric sensors installed in the engine body which produce a signal proportional to the acceleration of the engine body.

These sensors are utilised as it is known that said knocking causes oscillations at known frequencies. The detonation level in a cylinder of an internal combustion engine can therefore be determined by filtering the sensor signal by means of a band-pass filter and evaluating the signal filtered to calculate the energy thereby produced.

This method, part of the commonly known technique, has various drawbacks. The most relevant drawbacks are constituted of the possibility of the sensors failing to work and the energy produced by the detonation failing to be calculated due to a high degree of disturbance of the sensor signal in some engine types.

US 2004/084020 discloses using a detected ionisation current to determine an ignition advance.

### Disclosure of Invention

The aim of the present invention is to identify a method and devices therefore for evaluating the detonation inside each cylinder of an internal combustion engine accurately and reliably, avoiding the use of sensors and effecting said evaluation for each cylinder of said engine. The present invention is based on the advantageous use of the ionisation current generated by a device positioned on each cylinder. Said device comprises a coil, a spark plug, a polarisation circuit, an acquisition circuit and said device generates said ionisation current being ions produced during the combustion of the fuel in each cylinder of said engine said ionisation current is considered in the present invention because the number of ions are measurable in said ionisation current and said number of ions has a close correlation with the quantity of energy developed by the detonation of the air-combustible mix in each cylinder of an internal combustion engine.

The present invention is based on the use of the ionisation current generated by a device positioned on each cylinder of said engine. This ionisation current is measured by and processed by means performing the method of the present invention which are installed into a Control Unit commonly utilised for the management of said combustion engines. Said Control Unit is endowed with a high-pass filter and means, preferably electronic ones, which implement the method of the present invention. The aims and advantages of the present invention will better emerge in the description that follows and the plates enclosed of an internal combustion engine with a sole cylinder, illustrated purely in the form of a non-limiting example, in which:
- figure 1 illustrates a schematic view of the engine which utilises the method and the Control Unit in which the means that implement the invention in question are housed;
- figure 2 illustrates a schematic view of the device positioned above each cylinder of the engine according to the invention in question;
- figure 3 illustrates, schematically, the flow chart relating to the method according to the invention in question.

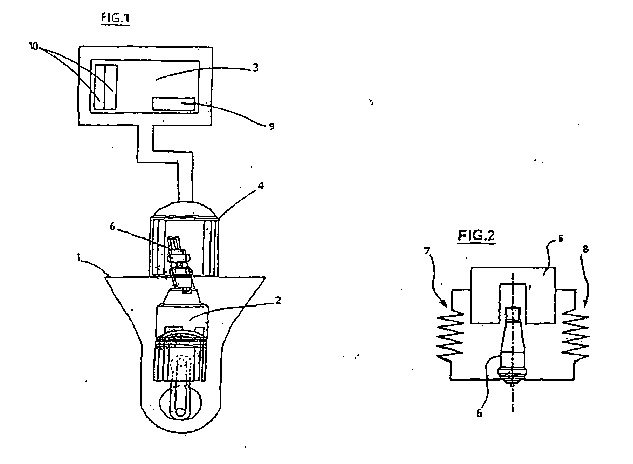

With reference to figure 1, (1) indicates an internal combustion engine as a whole, a device (4) is shown, positioned above the cylinder which, in addition to creating the spark, by means of the spark plug (6), necessary to generate the combustion inside the cylinder, said device (4) generates and measures the ionisation current, indispensable to implement the method in question, and a cylinder (2) is shown, into which the fuel is injected. This figure also shows a Control Unit (3) endowed with a high-pass filter with cut-off frequency between 2 KHz and 8 KHz (9) and the means (10) to implement the method by the process of the ionisation current.

with reference to figure 2, said figure indicates the part of the device 4 in question in the invention, positioned above the cylinders, which, in addition to creating the spark necessary to realise the combustion inside the the combustion the cylinder, generates the ionisation current indispensable for implementing the method in question. Said ionisation current is needed for performing the present invention because the number of ions in said ionisation current has a close correlation with the quantity of energy developed by the knocking of the air-combustible mix in each cylinder of an internal combustion engine. This part of the device (4) is constituted of a coil (5) and a spark plug (6).

These two elements (5) and (6) are mutually connected by a polarisation circuit (7) utilized to generate ionisation current and an acquisition circuit (8), which is utilized for measuring the ionisation current.

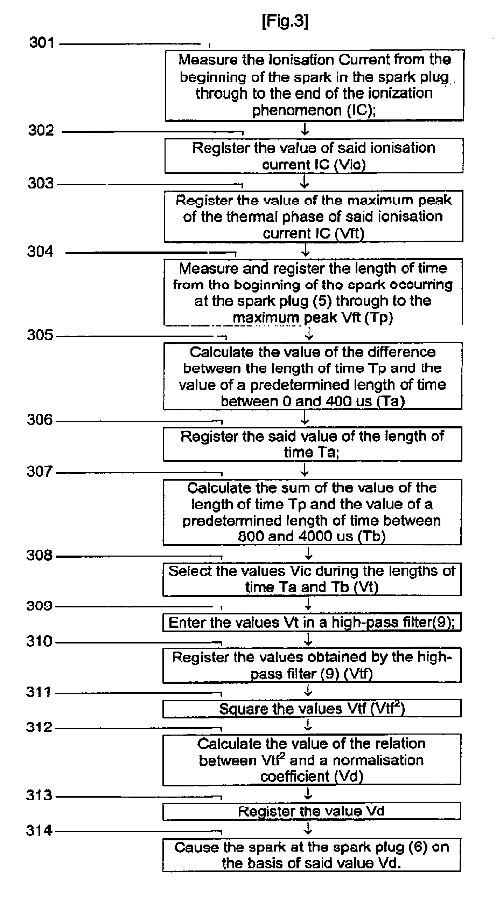

With reference to figure 3, said figure indicates a flow chart which schematically illustrates the method in question in the invention. This method develops over various phases, which are repeated for each cycle of the engine (1) and to which the relative means (10) correspond, said means being preferably electronic. In a first phase (301), the measurement of the ionisation current (IC) present in each cylinder is effected from the beginning of the spark occurring in the spark plug (3) through to the end of the ionisation phenomenon. Said ionisation current is released by means of the device (2) which, in addition to creating the spark necessary to realise the combustion of the air-combustible mix inside the cylinder, releases the ionisation current, referred to as IC. After measuring said ionisation current (IC), there is a second phase (302) which envisages the registration of the value of said ionisation current IC, referred to as Vic. In the subsequent phase (303), the value of the maximum peak of the thermal phase of said ionisation current IC is registered, referred to as Vft. Phase (304) envisages the measurement and registration of the length of time from the beginning of the spark occurring at the spark plug (5) through to the maximum peak Vft, said length of time being referred to in the present invention as Tp. The following phase (305) envisages the calculation of the value of the difference between the length of time Tp and the value of a predetermined length of time between 0 and 400 us. Said difference is referred to in the present invention as Ta. The value of Ta is registered in the subsequent phase (306). The method of the present invention continues with phase (307) which envisages the calculation of the sum of the value of the length of time Tp and the value of the predetermined length of time between 800 and 4000 us, referred to as Tb. The subsequent phase (308) envisages the selection of the values of the ionisation current IC registered in the previous phase (302), during the lengths of time Ta and Tb. Said selected values are referred to in the present invention as Vt. In the subsequent phase (309), the values Vt enter a high-pass

## Claims

1. A method for evaluating the detonation inside each cylinder of an internal combustion engine (1) equipped with one or more cylinders (2) and having a Control Unit (3) endowed with a high-pass filter with cut-off frequency between 2 KHz and 8 KHz (9) electronic means performing the method and device (4) for each cylinder connected to the Control Unit (3) comprising a coil (5) and a spark plug (6) to generate the spark, a polarisation circuit (7) to generate the ionisation current (IC), an acquisition circuit (8) for measuring the ionisation current (IC), and that said method using said ionisation current (IC) comprises the following phases performed by the Control Unit (3): **(301)** measuring, in the cylinder (2) of said engine (1), the ionisation current (IC) from the beginning of the spark occurring in the spark plug (6) through to the end of the ionisation phenomenon; **(302)** registration of the values of said ionisation current IC (Vic); **(303)** registration of the value of the maximum peak of the thermal phase of said ionisation current IC (Vft); **(304)** the method **characterised by** comprising the phases of measurement and registration of the length of time from the beginning of the spark occurring at the spark plug (5) through the maximum peak Vft (Tp); **(305)** calculation of the value of the difference between the length of time Tp and the value of a predetermined length of time between 0 and 400 us (Ta); **(306)** registration of the said value of the length of time Ta; **(307)** calculation of the sum of the value of the length of time Tp and the value of a predetermined length of time between 800 and 4000 us (Tb); **(308)** selection of the values Vic during the lengths of time Ta and Tb (Vt); **(309),** entry of the values Vt in a high-pass filter with cut-off frequency between 2 KHz and 8 KHz (9); **(310)** registration of the values obtained by the high-pass filter (9) (Vtf); **(311)** squaring of the values Vtf (Vtf²); **(312)** calculation of the value of the sum of the values Vtf², (∑Vtf²); **(313)** calculation of the value of the relation between ∑Vtf² and a normalisation coefficient (Vd); **(314)** registration of the value Vd; **(315),** generation of the spark at the spark plug (6) on the basis of said value Vd.

2. A device for evaluating the detonation inside each cylinder of an internal combustion engine (1) equipped with one or more cylinders (2) and placed into a Control Unit (3) endowed with a high-pass filter with cut-off frequency between 2 KHz and 8 KHz (9) connected to a device (4) for each cylinder comprising a coil (5) and a spark plug (6) to generate the spark, a polarisation circuit (7) to produce the ionisation current (IC), an acquisition circuit (8) for measuring the ionisation current (IC), **characterised by the fact** that said control unit comprises means (10) with which to continually: **(301)** in the cylinder (2) of said engine (1), the measurement of the ionisation current (IC) from the beginning of the spark occurring in the spark plug (6) through to the end of the ionisation phenomenon; **(302)** register the values of said ionisation current IC (Vic); **(303)** register the value of the maximum peak of the thermal phase of said ionisation current IC (Vft); **(304)** measure and register the length of time from the beginning of the spark occurring at the spark plug (5) through the maximum peak Vft (Tp); **(305)** calculate the value of the difference between the length of time Tp and the value of a predetermined length of time between 0 and 400 us (Ta); **(306)** register the said value of the length of time Ta; **(307)** calculate the sum of the value of the length of time Tp and the value of a predetermined length of time between 800 and 4000 us (Tb); **(308)** select the values Vic during the lengths of time Ta and Tb (Vt); **(309),** enter the values Vt in a high-pass filter with cut-off frequency between 2 KHz and 8 KHz (9); **(310)** register the values obtained by the high-pass filter (9) (Vtf); **(311)** square the values Vtf (Vtf²); **(312)** calculate the value of the sum of the values Vtf², (∑Vtf²); **(313)** calculate the value of the relation between ∑Vtf² and a normalisation coefficient (Vd); **(314)** register the value Vd; **(315),** generate the spark at the spark plug (6) on the basis of said value Vd.

## Patentansprüche

1. Eine Methode zur Messung des Zündverlaufs im Inneren der Kolben eines Verbrennungsmotors (1) mit einem oder mehreren Kolben (2), dazu ein Steuerelement (3), ausgestattet mit einem Hochpassfilter mit einer Grenzfrequenz zwischen 2 KHz und 8 KHz (9), elektronischen Funktionen zur Durchführung der Methode und einer mit dem Steuerelement (3) verbundenen Vorrichtung (4) für jeden Kolben, bestehend aus einer Spule (5), einer Zündkerze (6) zur Erzeugung des Zündfunkens, einem Polarisationskreislaufs (7) zur Erzeugung des Ionenstroms (IC), eines Aufzeichnungskreislaufs (8) zur Messung des Ionenstroms (IC) und besagter Methode, die unter Einsatz des Ionenstroms (IC) aus vier durch das Steuerelement (3) eingeleiteten Phasen besteht: (301) Messung im Kolben (2) des Motors (1) des Ionenstroms (IC) vom Beginn des Zündverlaufs an der Zündkerze (6) bis zum Ende des Ionisationsphänomens; (302) Aufzeichnung der Werte des Ionenstroms IC (Vic); (303) Aufzeichnung der Spitzenwerte der thermischen Phase des Ionenstroms IC (Vft); (304) Eine Methode die aus der Messung und Aufzeichnung der Dauer ab Beginn des Zündverlaufs an der Zündkerze (5) bis zum Maximalwert Vft (Tp) besteht; (305) Berechnung der Differenz zwischen der Dauer Tp und des Wertes einer vorherbestimmten Dauer zwischen o und 400 µs (Ta); (306) Aufzeichnung dieser Dauer Ta; (307) Berechnung der Summe des Wertes für die Dauer Tp und des Wertes einer vorherbestimmten Dauer zwischen 800 und 4000 µs (Tb); (308) Auswahl der Werte Vic während der Phasen Ta und Tb (vt); (309) Einspeisung des Wertes Vt in den Hochpassfilter mit einer Grenzfrequenz zwischen 2 KHz und 8 KHz (9); (310) Aufzeichnung des vom Hochpassfilter ermittelten Wertes (Vtf); (311) Quadratur des Wertes Vtf (Vtf²); (312) Berechnung der Summe aus Vtf², (EVtf²); (313) Berechnung des Verhältnisses zwischen EVtf³ und einem Normalisierungskoeffizienten (Vd); (314) Aufzeichnung des Wertes Vd; (315) Erzeugung eines Zündfunkens an der Zündkerze (6) auf der Basis des ermittelten Wertes Vd.

2. Ein Gerät zur Messung des Zündverlaufs innerhalb jedes Kolbens eines Verbrennungsmotors (1) mit einem oder mehreren Kolben (2), angebracht in einem Steuerelement (3), das ausgestattet ist mit einem Hochpassfilter mit einer Grenzfrequenz zwischen 2 KHz und 8 KHz (9), verbunden mit einer Vorrichtung (4) für jeden Kolben, bestehend aus einer Spule (5), einer Zündkerze (6) zur Erzeugung des Zündfunkens, einem Polarisationskreislaufs (7) zur Erzeugung des Ionenstroms (IC), mit der Eigenschaft, dass besagtes Steuerelement über die Technik (10) verfügt, kontinuierlich folgende Daten zu ermitteln: (301) Messung des Ionenstroms (IC) im Kolben (2) des Motors (1) ab Beginn der Zündung an der Zündkerze (6) bis zum Ende des Ionenstroms; (302) Aufzeichnung der Werte des Ionenstroms IC (Vic); (303) Aufzeichnung der Spitzenwerte der thermischen Phase des Ionenstroms IC (Vft); (304) Messung und Aufzeichnung der Dauer ab Beginn des Zündverlaufs an der Zündkerze (5) bis zum Maximalwert Vft (Tp); (305) Berechnung der Differenz zwischen der Dauer Tp und des Wertes einer vorherbestimmten Dauer zwischen o und 400 µs (Ta); (306) Aufzeichnung dieser Dauer Ta; (307) Berechnung der Summe der Werte für die Dauer Tp und des Wertes einer vorherbestimmten Dauer zwischen 800 und 4000 µs (Tb); (308) Auswahl der Werte Vic während der zeitlichen Phasen Ta und Tb (vt); (309) Einspeisung des Wertes Vt in einen Hochpassfilter mit einer Grenzfrequenz zwischen 2 KHz und 8 KHz (9); (310) Aufzeichnung des vom Hochpassfilter ermittelten Wertes (Vtf); (311) Quadratur des Wertes Vtf (Vtf²); (312) Berechnung der Summe aus Vtf², (EVtf²); (313) Berechnung des Verhältnisses zwischen EVtf³ und einem Normalisierungskoeffizienten (Yd); (314) Aufzeichnung des Wertes Vd; (315) Erzeugung eines Zündfunkens an der Zündkerze (6) auf der Basis des ermittelten Wertes Vd.

## Revendications

1. Une méthode pour évaluer la détonation à l'intérieur de chaque cylindre d'un moteur à combustion interne (1) équipé d'un ou plusieurs cylindres (2) et disposant d'une unité de commande (3) dotée d'un filtre passe-haut avec fréquence de coupure entre 2 KHz et 8 KHz (9), des moyens électroniques exécutant la méthode et un dispositif (4) pour chaque cylindre connecté à l'unité de commande (3) comprenant une bobine (5) et une bougie d'allumage (6) pour générer l'étincelle, un circuit de polarisation (7) pour générer le courant d'ionisation (IC), un circuit d'acquisition (8) pour mesurer le courant d'ionisation (IC), et ladite méthode qui utilise le courant d'ionisation (IC) comprend les phases suivantes exécutées par l'unité de commande (3) : **(301)** la mesure, dans le cylindre (2) dudit moteur (1), du courant d'ionisation (IC) depuis le début de l'étincelle produite dans la bougie d'allumage (6) jusqu'à la fin du phénomène d'ionisation ; **(302)** l'enregistrement des valeurs dudit courant d'ionisation IC (Vic) ; **(303)** l'enregistrement de la valeur du pic maximum de la phase thermique dudit courant d'ionisation IC (Vft) ; **(304)** le fait caractéristique étant que la méthode comprend des phases de mesure et d'enregistrement de la durée entre le début de l'étincelle se produisant dans la bougie d'allumage (5) et le pic maximum Vft (Tp) ; **(305)** le calcul de la valeur de la différence entre la durée Tp et la valeur d'une durée prédéterminée entre 0 et 400 ils (Ta) ; **(306)** l'enregistrement de ladite valeur de la durée Ta ; **(307)** le calcul de la somme de la valeur de durée Tp et la valeur d'une durée prédéterminée entre 800 et 4000 µs (Tb) ; **(308)** la sélection des valeurs Vic pendant les durées Ta et Tb (Vt) ; **(309)** l'entrée des valeurs Vt dans un filtre passe-haut avec fréquence de coupure entre 2 KHz et 8 KHz (9) ; **(310)** l'enregistrement des valeurs obtenues par le filtre passe-haut (9) (Vtf) : **(311)** la quadrature des valeurs Vtf (Vtf²) ; **(312)** le calcul de la valeur de la somme des valeurs Vtf², (∑Vtf²) ; **(313)** le calcul de la valeur du rapport entre ∑Vtf² et un coefficient de normalisation (Vd) ; **(314)** l'enregistrement de la valeur Vd ; (315) la génération de l'étincelle dans la bougie d'allumage (6) sur la base de ladite valeur Vd.

2. Un dispositif pour évaluer la détonation à l'intérieur de chaque cylindre d'un moteur à combustion interne (1) équipé d'un ou plusieurs cylindres (2) et placé dans une unité de commande (3) dotée d'un filtre passe-haut avec fréquence de coupure entre 2 KHz et 8 KHz (9) connecté à un dispositif (4) pour chaque cylindre comprenant une bobine (5) et une bougie d'allumage (6) pour générer l'étincelle, un circuit de polarisation (7) pour produire le courant d'ionisation (IC), un circuit d'acquisition (8) pour mesurer le courant d'ionisation (IC), **le fait caractéristique étant** que ladite unité de commande comprend des moyens (10) pour continuellement : **(301)** dans le cylindre (2) dudit moteur (1), mesurer le courant d'ionisation (IC) depuis le début de l'étincelle se produisant dans la bougie d'allumage (6) jusqu'à la fin du phénomène d'ionisation ; **(302)** enregistrer les valeurs dudit courant d'ionisation IC (Vic) ; **(303)** enregistrer la valeur du pic maximum de la phase thermique dudit courant d'ionisation IC (Vft) ; **(304)** mesurer et enregistrer la durée entre le début de l'étincelle se produisant dans la bougie d'allumage (5) et le pic maximum Vft (Tp) ; **(305)** calculer la valeur de la différence entre la durée Tp et la valeur d'une durée prédéterminée entre 0 et 400 µs (Ta) ; **(306)** enregistrer ladite valeur de la durée Ta ; **(307)** calculer la somme de la valeur de durée Tp et la valeur d'une durée prédéterminée entre 800 et 4000 µs (Tb) ; **(308)** sélectionner les valeurs Vic pendant les durées Ta et Tb (Vt) ; **(309)** entrer les valeurs Vt dans un filtre passe-haut avec fréquence de coupure entre 2 KHz et 8 KHz (9) ; **(310)** enregistrer les valeurs obtenues par le filtre passe-haut (9) (Vtf) : **(311)** faire le carré des valeurs Vtf (Vtf²) ; **(312)** calculer la valeur de la somme des valeurs Vtf², (∑Vtf²) ; **(313)** calculer la valeur du rapport entre ∑Vtf² et un coefficient de normalisation (Vd) ; **(314)** enregistrer la valeur Vd ; **(315)** générer l'étincelle dans la bougie d'allumage (6) sur la base de ladite valeur Vd.
